# EUROPEAN PATENT APPLICATION

(11) **EP 1 265 258 A1**
(43) Date of publication of application: **11.12.2002**
(21) Application number: 01000196.4
(22) Date of filing: 05.06.2001
(51) Int. Cl.: H01B 7/00, F16L 11/12

(54) **A cord**

(71) Applicant: Parein, Eric, 2020 Antwerpen (BE)
(72) Inventor: Parein, Eric, 2020 Antwerpen (BE)
(74) Representative: Quintelier, Claude

(57) **Abstract**

A cord comprising a cylindrical part (2) and a tubular part (3) extending in parallel to each other, said tubular part having a lengthwise extending opening (4) dimensioned in such a manner as to engage a subsequent cylindrical part (2).

## Description

The present invention relates to a cord.

Cords are generally known and used for fixing things together, for maintaining an open access closed or for connecting one point to another.

It is an object of the present invention to create a configuration of a cord enabling to use such a cord for further purposes such as for housing electric wires, manufacturing carpets, guiding members etc. while enabling an easy assembling of a plurality of cords.

For this purpose a cord according to the present invention is characterised in that it comprises a cylindrical part and a tubular part extending in parallel to each other, said tubular part having a lengthwise extending opening dimensioned in such a manner as to engage a subsequent cylindrical part. Due to the opening into the tubular part it is possible to connect subsequent cords simply by engaging a subsequent cylindrical part of the same or a subsequent cord into the tubular part of the cord. In such a manner a single cord can be either rolled up by engaging the subsequent cylindrical parts into the tubular parts, or the different cords can not only be connected to each other but they can also rotate with respect to each other, due to their circular shape. A flexible connection is thus obtained which enables different uses.

It should be noted that the Swiss patent 607609 describes also a structure with a cylindrical and tubular part extending in parallel. This document relates however to a bracelet and there is no teaching to use such a construction as a cord.

A first preferred embodiment of a cord according to the invention is characterised in that said cylindrical part has an outer diameter substantially corresponding to an inner diameter of said tubular part. This enables an easy insertion and fitting of the cylindrical part into the tubular part.

A second preferred embodiment of a cord according to the invention is characterised in that it is obtainable by co-extrusion of said cylindrical and tubular part. Co-extrusion enables a cheap, easy and reliable manufacturing.

Preferably said cylindrical and said tubular part have corresponding outer diameters. This facilitates the cord production;

A third preferred embodiment of a cord according to the invention is characterised in that said cylindrical part is hollow. A hollow cylindrical part enables the insertion of wires such as electrical wires, in particular when the cord is made of electrically insulating material.

Preferably said cylindrical part encloses an electrical conductive wire. When the electrical conductive wire is already present in the cord, the latter can be used as electric wire and the presence of the tubular part facilitates the mounting of subsequent electric wires.

Preferably an intermediate connecting member extends between said cylindrical and said tubular part. The intermediate member enables to keep the cylindrical and tubular part at a distance from each other.

Preferably the cord is reinforced with a wire, preferably a nylon wire, extending lengthwise. A reinforced cord is thus obtained.

The invention will now be described in more details with reference to the drawings showing preferred embodiments of a cord according to the invention. In the drawings :
figure 1 shows a first embodiment of a cord according to the invention;
figure 2 shows the same first embodiment but now as a series of subsequent cords connected together;
figure 3 shows the first embodiment with an electric wire inside the cylindrical part;
figures 4 and 5 show a second and a third embodiment of a cord according to the invention;
figures 6 and 7 show tubes obtained by using cords according to the invention;
figure 8 shows a carpet obtained by using cords according to the invention;
figure 9 shows a fourth embodiment of a cord according to the invention;
figure 10 illustrates how a cord according to the invention and comprising an electrical conductive wire can be fixed to a wall; and
figure 11 illustrates how a cord according to the invention can be rolled up.

In the drawings, a same reference sign has been assigned to a same or analogous element.

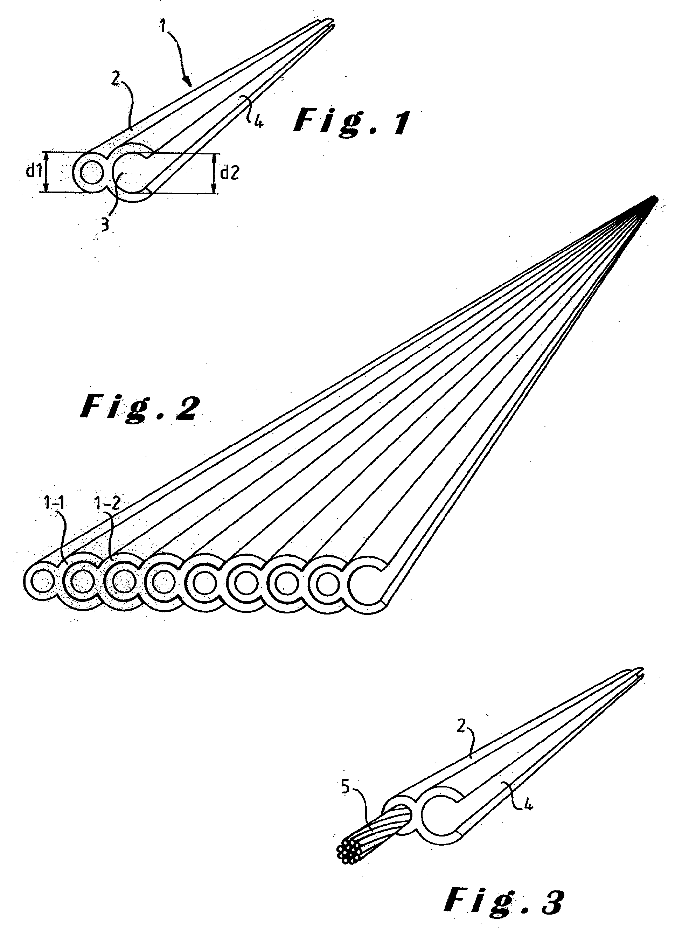

The cord illustrated in figure 1 comprises a cylindrical part 2 and a tubular part 3 extending in parallel and adjacent to each other. The cylindrical part can either be hollow or completely filled up with material depending on the intended use. If the cord should be used as insulator for an electrical wire 5, such as illustrated in figure 3, then the cord should of course be made of electrically insulating material and the cylindrical part should be hollow in order to enable to house the electric wire.

The cord is preferably made by co-extrusion of the cylindrical and tubular part as this enables an easy, quick and reliable manufacturing. The material of the cord is for example formed by a synthetic material such as PVC, polypropylene, nylon or by natural or synthetic rubber. The material could also be made of foam if heat insulation is required.

The outer diameter d1 of the cylindrical part 2 and the inner diameter d2 of the tubular part 3 are substantially corresponding in order to enable the cylindrical part of a second cord 1-2 to be inserted into the tubular part of a first cord 1-1 such as illustrated in figure 2. In order to enable this insertion, the tubular part is provided with a lengthwise extending opening 4. For connecting the second cord 1-2 to the first cord 1-1, the cylindrical part of the second cord is engaged into the opening 4 of the first cord in order to be pushed inside the tubular part. The rounded shape of the tubular and cylindrical part enables a hinged connection between two or more subsequent cords.

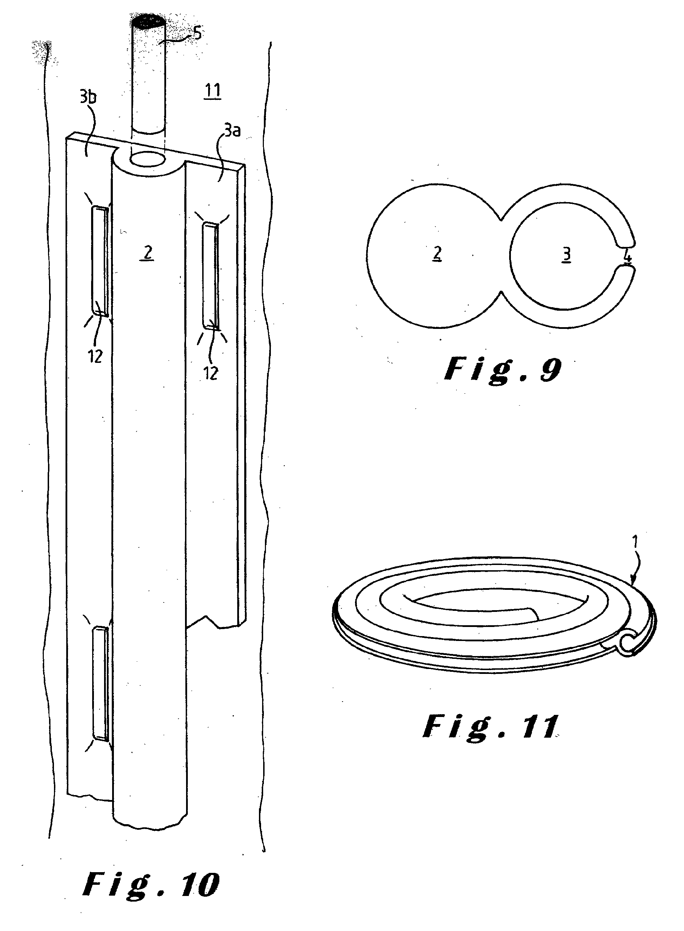

According to another embodiment, such as illustrated in figure 9, the cylindrical part 2 and the tubular part 3 have corresponding outer diameters, which facilitates the manufacturing of the cord. In this embodiment the cord is preferably made of flexible or resilient material in such a manner that the tubular part can be sufficiently bend open when introducing the cylindrical part. The resilient material than also enables to maintain the cylindrical part clamped into the tubular part.

Figure 4 illustrates a second embodiment of a cord according to the invention which distinguishes from the first embodiment in that intermediate connecting member 6 extends between the cylindrical 2 and the tubular part 3. This intermediate member enables to create a distance between the cylindrical and tubular member which could be of interest for electric cables carrying a high voltage or frequency and which have to be at a distance from each other. Holes 7 could be provided in the intermediate member in order to enable a fixing of the cord.

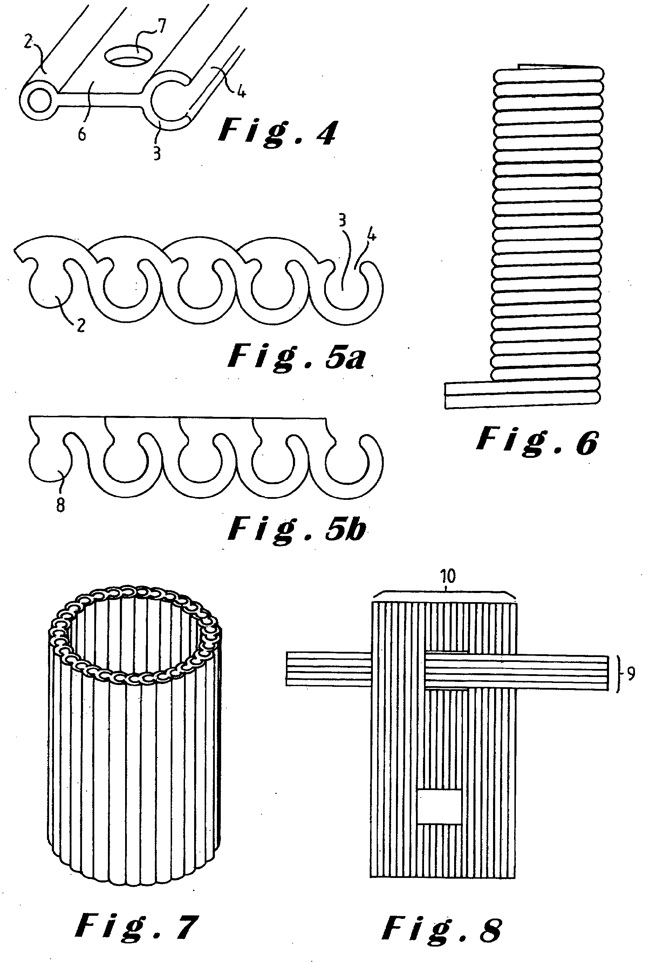

Figure 5 illustrates a third preferred embodiment of a cord according to the invention. This embodiment distinguishes from the first embodiment in that the opening 4 is not at a lateral but at a top or bottom side of the cord. This embodiment has a mainly S shaped configuration where the cylindrical part 2 forms a protrusion to the S shape. A head end 8 of the cylindrical part and the opening 4 of the tubular part are then situated on opposite sides of the cords in order to enable a vertical insertion rather than a horizontal one. Preferably in this embodiment the cylindrical part is solid in order to obtain a rigid cord structure.

As shown in figures 6 and 11, the cord can be rolled up in order to form a tube or a coil, thereby engaging in a horizontal direction, respectively in a same surface, a subsequent cylindrical part of the same cord in the tubular part. In figure 7, another tube is shown which is obtained by engaging the cylindrical part vertically into the tubular part.

By crossing a first series 9 of cords with a second series 10 of cords according to the invention, a carpet can be obtained such as illustrated in figure 8.

Figure 10 illustrates how a cord, preferably enclosing an electrical conductive wire 5, can be applied against a wall 11. The tubular part 3 is fold open starting from the opening in order to form two flaps 3-a and 3-b. Those flaps are applied against the wall 11 and fixed thereon for example by means of clamps 12. A further cord can then be applied by simply applying the tubular part thereof on the cylindrical part of the cord fixed on the wall.

In order to reinforce the cord, it is also possible to introduce a wire, preferably a nylon wire, into the cylindrical part of the cord. In such a manner the cord can resist to a higher traction force.

## Claims

1. A cord, **characterised in that** it comprises a cylindrical part and a tubular part extending in parallel to each other, said tubular part having a lengthwise extending opening dimensioned in such a manner as to engage a subsequent cylindrical part.

2. A cord as claimed in claim 1, **characterised in that** said cylindrical part having an outer diameter substantially corresponding to an inner diameter of said tubular part.

3. A cord as claimed in claim 1, **characterised in that** said cylindrical and said tubular part have corresponding outer diameters.

4. A cord as claimed in any one of the claims 1 to 3, **characterised in that** it is obtainable by co-extrusion of said cylindrical and tubular part.

5. A cord as claimed in any one of the claims 1 to 4, **characterised in that** said cylindrical part is hollow.

6. A cord as claimed in any one of the claims 1 to 5, **characterised in that** it is made of electrically and/or heat insulating material.

7. A cord as claimed in claim 6, **characterised in that** said cylindrical part encloses an electrical conductive wire.

8. A cord as claimed in any one of the claims 1 to 7, **characterised in that** an intermediate connecting member extends between said cylindrical and said tubular part.

9. A cord as claimed in any one of the claims 1 to 8, **characterised in that** it is reinforced with a wire, preferably a nylon wire, extending lengthwise.

10. A cord as claimed in any one of the claims 1 to 9, **characterised in that** a heading of said cylindrical part and said opening of said tubular part extend on opposite sides of said cord.

11. A cord as claimed in any one of the claims 1 to 10, **characterised in that** at least said tubular part is made of flexible material.
